# EUROPÄISCHE PATENTSCHRIFT

(11) **EP 2 829 734 B1**
(45) Veröffentlichungstag und Bekanntmachung des Hinweises auf die Patenterteilung: **05.09.2018**
(21) Anmeldenummer: 14176553.7
(22) Anmeldetag: 10.07.2014
(51) Int. Cl.: F04D 19/04, F04D 29/52, F04D 25/06

(54) **Vakuumpumpe**
Vacuum pump
Pompe à vide

(30) Priorität: 26.07.2013 DE 102013214662
(43) Veröffentlichungstag der Anmeldung: 28.01.2015
(73) Patentinhaber: PFEIFFER VACUUM GMBH, 35614 Asslar (DE)
(72) Erfinder: Mekota, Mirko, 35630 Ehringshausen (DE); Hofmann, Jan, 35305 Grünberg (DE); Leib, Uwe, 35781 Weilburg (DE); Schill, Michael, 35614 Asslar-Bechlingen (DE); Koch, Bernhard, 35799 Barig-Selbenhausen (DE)
(74) Vertreter: Manitz Finsterwald Patentanwälte PartmbB

(56) Entgegenhaltungen:
- EP-A1- 0 260 733
- EP-A2- 1 039 138
- EP-A2- 1 484 508
- DE-A1- 4 314 418
- US-A1- 2002 039 533
- US-A1- 2008 253 903

## Beschreibung

Die vorliegende Erfindung betrifft eine Vakuumpumpe mit einem Pumpeneinlass, einem Pumpenauslass, einem um eine Rotationsachse drehbaren Rotor und wenigstens einer Prozessgaspumpstufe zur Förderung eines an dem Pumpeneinlass anstehenden Prozessgases.

Vakuumpumpen werden in unterschiedlichen technischen Gebieten, beispielsweise bei der Halbleiterherstellung, eingesetzt, um ein für einen jeweiligen Prozess erforderliches Vakuum zu schaffen. Eine Vakuumpumpe umfasst typischerweise einen Motorraum und einen in dem Motorraum angeordneten und zum drehenden Antreiben des Rotors ausgebildeten Antriebsmotor, welcher einen Motorstator umfasst.

Bei bekannten Vakuumpumpen wird das Prozessgas an dem Motorraum vorbei von dem Einlass zu dem Auslass der Vakuumpumpe geführt. Für diese Gasführung sind zusätzliche Förderstrukturen und weitere Vorkehrungen erforderlich, die die Komplexität des Pumpenaufbaus, den für die Herstellung der Vakuumpumpe notwendigen Aufwand und den Bauraum der Vakuumpumpe erhöhen.

Aus der EP 0 260 733 A1 ist eine Vakuumpumpe gemäß dem Oberbegriff des Anspruchs 1 bekannt.

Die EP 1 484 508 A2 beschreibt eine ähnliche Vakuumpumpe, bei der jedoch kein Gasweg an einem zwischen einem Motorstator und einem Rotor der Vakuumpumpe vorgesehenen Zwischenraum vorbeiführt.

Eine ähnliche Vakuumpumpe ohne einen am Zwischenraum zwischen Motorstator und Rotor vorbeiführenden Gasweg ist in der EP 1 039 138 A2 beschrieben.

Die US 2008/253903 A1 beschreibt ebenfalls eine ähnliche Vakuumpumpe ohne einen Gasweg, der am Zwischenraum zwischen Motorstator und Rotor vorbeiführt.

In der DE 43 14 418 A1 ist eine Vakuumpumpe mit Turbomolekularpumpstufen und einem weiteren Pumpenabschnitt aus Siegbahnstufen beschrieben.

Aufgabe der Erfindung ist besteht darin, eine Vakuumpumpe zu schaffen, die einen einfachen Aufbau aufweist, die auf kleinem Bauraum und mit geringem Herstellungsaufwand realisierbar ist und die gleichzeitig eine hohe Saugleistung und eine hohe Kompression bereitstellt.

Die Aufgabe wird durch eine Vakuumpumpe mit den Merkmalen des Anspruchs 1 gelöst.

Die Vakuumpumpe umfasst einen Pumpeneinlass, einen Pumpenauslass, einen um eine Rotationsachse drehbaren Rotor, wenigstens eine Prozessgaspumpstufe zur Förderung eines an dem Pumpeneinlass anstehenden Prozessgases von dem Pumpeneinlass zu dem Pumpenauslass, einen Motorraum und einen in dem Motorraum angeordneten und zum drehenden Antreiben des Rotors ausgebildeten Antriebsmotor, welcher einen Motorstator umfasst. Es ist wenigstens ein Gasweg für das Prozessgas von dem Pumpeneinlass zu dem Pumpenauslass vorgesehen, der durch den Motorraum führt und zumindest abschnittsweise an dem Motorstator entlang oder durch den Motorstator hindurch führt.

Die Gasführung durch den Motorraum hindurch und an dem Motorstator entlang oder durch den Motorstator hindurch gewährleistet einen kompakteren und einfacheren Aufbau der Vakuumpumpe, da der Motorraum selbst als gasleitende bzw. gasfördernde Struktur verwendet wird und der Aufwand für zusätzliche gasleitende Strukturen reduziert wird. Zudem kann der Pumpenauslass auf der von den pumpaktiven Strukturen der ein oder mehreren Prozessgaspumpstufen abgewandten Seite der Vakuumpumpe angeordnet sein, wo prinzipiell mehr freier Bauraum zur Verfügung steht als auf der Seite der Prozessgaspumpstufe, so dass eine bessere Raumausnutzung und dadurch ein kompakterer Aufbau der Vakuumpumpe gewährleistet wird.

Erfindungsgemäß ist ein zwischen dem Motorstator und dem Rotor angeordneter Zwischenraum vorgesehen. Der wenigstens eine Gasweg führt an dem Zwischenraum vorbei. Da das an dem Zwischenraum vorbei geführte Prozessgas nicht in unmittelbarem Kontakt mit dem Rotor steht, wird in diesem Bereich eine zusätzliche Reibung zwischen dem geförderten Prozessgas und dem Rotor vermieden bzw. zumindest reduziert, welche andernfalls aufgrund der schmalen Ausbildung des Zwischenraums und der hohen Drehzahlen, mit denen der Rotor rotiert, zu einer Beeinträchtigung der Saugleistung und der Kompression und zu einer starken Erwärmung und einer hohen Leistungsaufnahme der Vakuumpumpe führen würde.

Ferner sind erfindungsgemäß ein oder mehrere Kanäle vorgesehen, durch die der Gasweg an dem Zwischenraum vorbei verläuft und die über einen Teil ihres Umfangs oder über ihren gesamten Umfang durch den Motorstator begrenzt sind. Dadurch wird eine kanalisierte Führung des Gases an dem Zwischenraum vorbei mit einem geringen Leitungswiderstand bzw. einem hohen Leitwert erreicht. Zumindest ein Kanal oder jeder Kanal ist durch eine Aussparung oder Öffnung des Motorstators begrenzt. Derartige Kanäle sind besonders einfach herstellbar, da lediglich entsprechende Aussparungen bzw. Öffnungen in dem Motorstator vorgesehen werden müssen und sich die gewünschten Kanäle automatisch ergeben, wenn der Motorstator wie gewöhnlich in die Vakuumpumpe eingebaut wird.

Vorteilhafte Ausführungsformen der Erfindung sind in den Unteransprüchen, der Beschreibung und in den Figuren beschrieben.

Bevorzugt verläuft der an dem Zwischenraum vorbei führende Abschnitt des Gaswegs entlang des Motorstators und/oder durch den Motorstator hindurch. Dadurch wird ohne erheblichen zusätzlichen Bauraumbedarf oder Herstellungsaufwand eine günstige Gasführung an dem Zwischenraum vorbei erreicht.

Prinzipiell kann zusätzlich zu dem an dem Zwischenraum vorbei führenden Gasweg wenigstens ein weiterer Gasweg vorgesehen sein, welcher durch den Zwischenraum hindurch führt. In diesem Fall ist es bevorzugt, wenn der überwiegende Teil des durch den Motorraum geförderten Prozessgases an dem Zwischenraum vorbei gefördert wird.

Der Zwischenraum kann durch einander zugewandte Seiten des Motorstators und des Rotors begrenzt sein. Der Zwischenraum umfasst vorzugsweise einen, insbesondere radialen, Motorspalt, welcher sich vorzugsweise in axialer Richtung, d.h. in Richtung der Rotationsachse, durch den Motorstator hindurch erstreckt. Der Motorstator und der Rotor können sich über den Zwischenraum magnetisch beeinflussen, um ein von dem Antriebsmotor erzeugtes Antriebsmoment über den Zwischenraum auf den Rotor zu übertragen.

Bevorzugt verläuft der Gasweg von einem Einlass des Motorraums durch den Motorraum hindurch zu einem Auslass des Motorraums. Der Einlass und der Auslass können dabei auf unterschiedlichen Seiten des Zwischenraums zwischen dem Motorstator und dem Rotor angeordnet sein. Der Einlass und der Auslass des Motorraums können in axialer Richtung voneinander beabstandet und dabei insbesondere in axialer Richtung oberhalb und unterhalb des Zwischenraums angeordnet sein.

Der an dem Zwischenraum vorbei verlaufende Gasweg kann, insbesondere zumindest in einem entlang des Motors und/oder durch den Motorstator hindurch verlaufenden Abschnitt, in axialer Richtung orientiert sein bzw. zumindest eine axiale Richtungskomponente aufweisen. Vorzugsweise erstreckt sich der an dem Zwischenraum vorbei und entlang des Motors und/oder durch den Motorstator hindurch verlaufende Abschnitt des Gaswegs über die gesamte axiale Länge des Motorstators.

Zumindest ein Kanal oder jeder Kanal erstreckt sich vorzugsweise über die gesamte axiale Länge oder über zumindest einen Teil der axialen Länge des Motorstators und ist entlang dieser Länge durch den Motorstator begrenzt.

Der Motorstator kann eine, insbesondere durchgehende, Öffnung mit einem geschlossenen Querschnitt aufweisen, welche den jeweiligen Kanal begrenzt. Der Motorstator kann auch eine Aussparung wie z.B. eine Nut aufweisen, die gemeinsam mit einem benachbarten Bestandteil der Vakuumpumpe, beispielsweise einem Teil des Gehäuses oder mit einem den Motorstator tragenden oder festlegenden Aufnahmeabschnitt den geschlossenen Querschnitt des Kanals begrenzt. Eine solche Aussparung ist vorzugsweise an der radialen Außenseite des Stators angeordnet. Dort ist zum einen eine günstige Gasleitung möglich. Außerdem wird die Funktionsweise des Motorstators durch das durch die Aussparung bedingte Fehlen von Material des Motorstators an der radialen Außenseite des Motorstators nur geringfügig beeinflusst.

Zumindest ein Kanal oder jeder Kanal kann zumindest über einen Teil seiner Länge oder über seine gesamte Länge eine axiale Richtungskomponente aufweisen.

Der Motorstator ist vorzugsweise dazu ausgebildet, ein elektromagnetisches Antriebsfeld zum Übertragen eines Drehmoments auf den Rotor zu erzeugen. Der Motorstator kann einen Kern aufweisen, welcher vorzugsweise eine oder mehrere Spulen des Motorstators trägt. Der Kern besteht vorzugsweise zumindest bereichsweise und insbesondere vollständig aus einem magnetischen, insbesondere weichmagnetischen, und/oder metallischen Material. Der Kern kann auf seiner radialen Innenseite eine oder mehrere Nuten aufweisen, in denen die Spulen festgelegt sind. Wenn der Motorstator wie vorstehend beschrieben eine oder mehrere Öffnungen oder Aussparungen aufweist, sind diese vorzugsweise in dem Kern des Motorstators ausgebildet.

Der Kern kann mehrere, insbesondere in axialer Richtung, aufeinander gestapelte Scheiben umfassen, welche vorzugsweise zumindest bereichsweise und insbesondere vollständig aus einem magnetischen, insbesondere weichmagnetischen, und/oder metallischen Material bestehen, und welche vorzugsweise ein Blechpaket des Motorstators bilden. Bei dem Blechpaket kann es sich um ein Backlackblechpaket handeln.

Gemäß einer vorteilhaften Ausführungsform sind die Aussparungen oder Öffnungen des Motorstators, die durch die ein oder mehreren Kanäle begrenzt sind, in den Scheiben des Kerns ausgebildet. Diese Ausgestaltung ist mit besonders geringem Aufwand realisierbar, da bevorzugt lediglich Aussparungen oder Öffnungen der einzelnen Scheiben vorgesehen werden müssen, um die gewünschten Kanäle zu erzeugen. Beispielsweise können die Aussparungen oder Öffnungen der Scheiben durch Stanzen erzeugt sein. In diesem Fall können die Scheiben bereits bei ihrer Herstellung mit den gewünschten Aussparungen und Öffnungen aus einem Rohling herausgestanzt werden, so dass die Herstellung der Vakuumpumpe ohne erheblichen zusätzlichen Aufwand möglich ist, da die Herstellung der fertigen Scheiben insbesondere mit nur einem Stanzwerkzeug erfolgen kann.

Gemäß einer vorteilhaften Ausführungsform sind die Kanäle so ausgebildet und/oder angeordnet, dass mit dem Antriebsmotor über den gesamten auf die Rotationsachse bezogenen Drehwinkel hinweg ein im Wesentlichen gleichmäßiges Antriebsdrehmoment erzeugbar ist. Insbesondere wird dabei vermieden, dass ein Fehlen von Material des Motorstators, welches durch die Aussparungen und/oder Öffnungen des Motorstators bedingt ist, zu einem Rastmoment und dadurch zu einem ungleichmäßigen Laufverhalten des Antriebsmotors führt. Wie nachstehend im Einzelnen beschrieben, können die Kanäle dazu zum Beispiel asymmetrisch ausgebildet oder asymmetrisch über den Umfang des Motorstators verteilt sein.

Gemäß einer Ausführungsform liegt zumindest einem und insbesondere jedem Kanal in radialer Richtung ein Bereich des Motorstators gegenüber, in dem kein Kanal angeordnet ist. Es liegen also vorzugsweise keine zwei Kanäle einander in radialer Richtung gegenüber. Dadurch wird vermieden, dass sich der Einfluss der Kanäle auf die magnetischen Pole eines Polpaares des Rotors, welche einander typischerweise in radialer Richtung gegenüberliegen, aufsummiert. Stattdessen liegt jeweils nur ein magnetischer Pol eines Polpaares im unmittelbaren Einflussbereich eines Kanals, so dass ein gleichmäßiges Laufverhalten des Motors erreicht wird.

Gemäß einer Ausführungsform ist eine ungerade Anzahl von Kanälen vorgesehen. Die Kanäle sind dabei vorzugsweise im Wesentlichen gleichmäßig über den Umfang des Motorstators verteilt angeordnet. Dadurch wird ebenfalls ein Aufsummieren der Einflüsse der Kanäle auf das Laufverhalten des Antriebsmotors vermieden und ein gleichmäßiges Laufverhalten erreicht.

Gemäß einer weiteren Ausführungsform ist zumindest ein Kanal und insbesondere jeder Kanal zumindest über einen Teil seiner Länge und insbesondere über seine gesamte Länge geneigt zu der Rotationsachse des Antriebsmotors orientiert. Dadurch wird gewährleistet, dass sich der Kanal und der Einfluss des Kanals auf das Laufverhalten des Antriebsmotors auf einen größeren Bereich des auf die Rotationsachse bezogenen Drehwinkels verteilen, so dass trotz der diskreten Natur der Kanäle über den gesamten Drehwinkel ein gleichmäßiges Laufverhalten gewährleistet wird. Durch die geneigte Orientierung der Kanäle wird außerdem die Kühlung des Motorstators aufgrund der größeren Oberfläche im Bereich der Kanäle verbessert.

Bevorzugt ist der Anteil des durch den Motorraum geförderten Prozessgases, der an dem Zwischenraum vorbei gefördert wird, größer als der - gegebenenfalls nach wie vor vorhandene - Anteil an Prozessgas, der durch den Zwischenraum hindurch gefördert wird. Um den Anteil des durch den Zwischenraum geförderten Prozessgases zu verringern, kann eine Dichtung zur fluiddichten Abdichtung des Zwischenraums vorgesehen sein. Die Dichtung kann zum Beispiel eine dynamische Labyrinthdichtung umfassen. Außerdem kann der Zwischenraum möglichst klein gehalten werden und beispielsweise einen besonders engen Motorspalt umfassen, wodurch der Anteil der durch den Zwischenraum geförderten Prozessgase ebenfalls verringert wird. Dadurch kann eine Beeinträchtigung der Saugleistung der Pumpe und eine Erwärmung der Pumpe infolge der Durchführung des Prozessgases durch den Motorraum besonders wirksam vermieden werden.

Gemäß einer vorteilhaften Ausführungsform ist eine Siegbahnpumpstufe vorgesehen, die zur Förderung des Prozessgases in den Motorraum ausgebildet ist.

Die zusätzliche Siegbahnpumpstufe lässt sich mit relativ geringem Aufwand und auf kleinen Bauraum realisieren und es hat sich gezeigt, dass die zusätzliche, durch die Siegbahnpumpstufe bereitgestellte Pumpwirkung dazu geeignet ist, eine durch eine Gasreibung in dem Zwischenraum zwischen dem Motorstator und dem Rotor bedingte Verringerung der Saugleistung der Pumpe zu kompensieren, so dass mit einfachen Mitteln eine kompakte und leistungsfähige Vakuumpumpe mit einer durch den Motorraum hindurch verlaufenden Gasführung geschaffen wird. Ein weiterer Gasweg kann bei dieser Ausgestaltung durch den Zwischenraum hindurch verlaufen, zusätzlich zu dem Gasweg, der an dem Zwischenraum vorbei führt. Es können auch mehrere Gaswege vorgesehen sein, die jeweils durch den Motorraum, und vorzugsweise an dem Motorstator entlang oder durch den Motorstator hindurch, führen, wobei wenigstens ein Gasweg durch den Zwischenraum hindurch und wenigstens ein Gasweg an dem Zwischenraum vorbei führt.

Bevorzugt weist die Siegbahnpumpstufe einen mit der wenigstens einen Prozessgaspumpstufe gasleitend verbundenen Einlass und einen mit dem Motorraum bzw. dessen Einlass gasleitend verbundenen Auslass auf. Der Auslass der Siegbahnpumpstufe kann dabei ohne Zwischenschaltung weiterer Pumpstufen in den Motorraum führen. Dadurch wird eine hohe Pumpeffizienz und Saugleistung der Vakuumpumpe erreicht.

Bevorzugt umfasst die Siegbahnpumpstufe ein, insbesondere drehfest mit dem Rotor gekoppeltes, Rotororgan, welches vorzugsweise scheibenförmig ausgebildet ist. Die Siegbahnpumpstufe kann ein Statororgan umfassen, welches vorzugsweise scheibenförmig ausgebildet ist. Das Rotororgan und das Statororgan können jeweils eine pumpaktive Oberfläche der Siegbahnpumpstufe bilden. Das scheibenförmige Rotor- und/oder Statororgan kann dabei jeweils radial zu der Rotationsachse orientiert sein.

Bevorzugt ist eine pumpaktive Oberfläche der Siegbahnpumpstufe strukturiert ausgebildet und/oder ist eine pumpaktive Oberfläche der Siegbahnpumpstufe eben bzw. glatt ausgebildet. Die Siegbahnpumpstufe kann eine strukturierte Oberfläche umfassen, welche bevorzugt durch das Statororgan gebildet ist, und eine ebene bzw. glatte Oberfläche, welche bevorzugt das Rotororgan gebildet ist. Die ebene bzw. glatte Ausbildung der pumpaktiven Oberfläche des Rotororgans hat den Vorteil, dass das Rotororgan einfach herstellbar ist und dass keine Schwächung des Rotororgans notwendig ist, welche andernfalls infolge der während des Betriebs der Vakuumpumpe auftretenden Fliehkraftbelastungen zu einer Beschädigung des Rotororgans führen könnte. Die Siegbahnpumpstufe kann prinzipiell auch ein Rotororgan mit einer strukturierten pumpaktiven Oberfläche und ein Statororgan mit einer glatten pumpaktiven Oberfläche umfassen. Es kann aber auch ein so genanntes Doppelgewinde vorgesehen sein. In diesem Fall ist die pumpaktive Oberfläche sowohl des Rotororgans als auch des Statororgans jeweils strukturiert.

Bevorzugt begrenzen die pumpaktiven Oberflächen wenigstens einen Förderkanal der Siegbahnpumpstufe und einen Dichtspalt zur Abdichtung des Förderkanals. Der Förderkanal kann einen spiralförmigen Verlauf aufweisen und insbesondere in einer zu der Rotationsachse radialen Ebene verlaufen. Der Dichtspalt ist vorzugsweise als axialer Dichtspalt ausgebildet. Die Förderstruktur kann aber auch diagonal, also schräg zur Rotationsachse, verlaufen.

Ein den Dichtspalt begrenzender Bereich zumindest einer pumpaktiven Oberfläche kann zumindest abschnittsweise durch eine materialentfernende Bearbeitung erzeugt oder erzeugbar sein. Dadurch kann eine besonders genaue Anpassung der pumpaktiven Oberflächen aufeinander und eine besonders geringe Spaltweite des Dichtspalts gewährleistet werden.

Gemäß einer vorteilhaften Ausführungsform bildet das Rotororgan gleichzeitig ein rotierendes Organ der Prozessgaspumpstufe. Dadurch wird eine besonders einfach herstellbare und gleichzeitig kompakte Vakuumpumpe geschaffen. Beispielsweise kann das Rotororgan als Rotorscheibe einer als Turbomolekularpumpstufe ausgebildeten Prozessgaspumpstufe ausgebildet sein. Die pumpaktive Oberfläche kann dabei durch den inneren Bereich der Rotorscheibe gebildet sein, welcher vorzugsweise als Tragring ausgebildet ist und welcher die von diesem Bereich vorzugsweise in radialer Richtung abstehenden Schaufeln der Rotorscheibe trägt. Das Rotororgan kann auch als Rotornabe einer insbesondere als Holweckpumpstufe, Gewindepumpstufe oder als Kreuz- bzw. Doppelkreuzgewindepumpstufe ausgebildeten Prozessgaspumpstufe ausgebildet sein. Es können auch mehrere Pumpstufen an der Nabe vorhanden sein.

Die Siegbahnpumpstufe ist vorzugsweise innerhalb eines Rotororgans der Prozessgaspumpstufe angeordnet. Vorzugsweise umfasst die Prozessgaspumpstufe wenigstens ein hülsenförmiges und insbesondere zylindrisches Rotororgan, insbesondere eine Holweckrotorhülse oder eine Hülse einer Gewindepumpstufe oder Kreuz- bzw. Doppelkreuzgewindepumpstufe, wobei die Siegbahnpumpstufe innerhalb des hülsenförmigen Rotororgans angeordnet ist. Dadurch wird eine besonders kompakte Bauform der Vakuumpumpe erreicht.

Gemäß einer vorteilhaften Ausführungsform ist das Statororgan der Siegbahnpumpstufe von einer den Motorraum begrenzenden Trennwand getragen oder durch die Trennwand gebildet. Diese Ausgestaltung ist besonders einfach herstellbar, da kein separates Rotororgan bzw. keine separate Tragstruktur für das Rotororgan vorgesehen werden muss.

Das Statororgan und/oder das Rotororgan der Siegbahnpumpstufe kann als Spritzgussteil, als Schmiedeteil oder als Umformteil ausgebildet sein.

Das Statororgan und/oder das Rotororgan der Siegbahnpumpstufe kann zumindest teilweise oder vollständig aus einem Metall, insbesondere Aluminium, bestehen und/oder das Statororgan und/oder das Rotororgan kann zumindest teilweise oder vollständig aus einem Kunststoff bestehen. Bevorzugt ist die Siegbahnpumpstufe dazu ausgebildet, das Prozessgas durch einen zwischen dem Rotor und einer den Motorraum begrenzenden Trennwand ausgebildeten, insbesondere radialen, Spalt in den Motorraum zu fördern. Dies lässt sich in besonders einfacher Weise bewerkstelligen, da keine separate gasleitende Verbindung zwischen der Siegbahnpumpstufe und der Trennwand vorgesehen sein muss.

Wie vorstehend beschrieben, ist ein zwischen dem Motorstator und dem Rotor angeordneter Zwischenraum vorgesehen. Gemäß einer Ausführungsform bilden einander gegenüberliegende Oberflächen des Motorstators und des Rotors, die den Zwischenraum begrenzen, pumpaktive Oberflächen einer Pumpstufe zur Förderung des Prozessgases durch den Zwischenraum. Die einander gegenüberliegenden Oberflächen des Motorstators und des Rotors bilden folglich eine Pumpstufe und können eine zusätzliche in Förderrichtung des Prozessgases gerichtete Pumpwirkung bereitstellen. Durch diese zusätzliche Pumpwirkung wird eine Verringerung der Saugleistung der Vakuumpumpe infolge einer in dem Zwischenraum auftretenden Gasreibung vermieden. Die störende Gasreibung wird stattdessen durch eine pumpwirksame und somit für die Saugleistung der Pumpe förderliche Interaktion mit dem Prozessgas ersetzt. Dadurch wird eine kostengünstig herstellbare und kompakte Vakuumpumpe geschaffen, welche eine hohe Saugleistung bei durch den Motorraum hindurch verlaufender Gasführung aufweist.

Bei dieser Ausgestaltung führt ein weiterer Gasweg durch den Zwischenraum und durch die Pumpstufe hindurch, die durch die den Zwischenraum begrenzenden Oberflächen gebildet ist. Zusätzlich ist der Gasweg vorgesehen, der, wie vorstehend beschrieben, an dem Zwischenraum vorbei führt.

Wenigstens eine der pumpaktiven Oberflächen ist vorzugsweise strukturiert ausgebildet. Die andere pumpaktive Oberfläche kann glatt ausgebildet sein. Es können auch beide pumpaktiven Oberflächen strukturiert ausgebildet sein. Die eine pumpaktive Oberfläche kann durch einen Kern des Motorstators bzw. dessen radiale Innenfläche gebildet sein. Die andere pumpaktive Oberfläche kann durch die radiale Außenfläche der Rotorwelle, die radiale Außenfläche einer auf der Rotorwelle angeordneten Permanentmagnetanordnung des Antriebsmotors und/oder die radiale Außenfläche einer die Permanentmagnetanordnung radial außenseitig umgebenden und die Permanentmagnetanordnung gegenüber dem Zwischenraum abdichtenden Kapselung gebildet sein.

Vorzugsweise ist die Pumpstufe als Holweckpumpstufe, Gewindepumpstufe oder als Kreuz- bzw. Doppelkreuzgewindepumpstufe ausgebildet. Zumindest eine pumpaktive Oberfläche kann einen oder mehrere spiralförmig um die Rotationsachse herum in axialer Richtung verlaufende Kanäle umfassen, welche bevorzugt Holweckkanäle bilden. Bei einer Holweckpumpstufe können die Holweckkanäle in der pumpaktiven Oberfläche des Stators angeordnet sein und die gegenüberliegende pumpaktive Oberfläche des Rotors kann glatt ausgebildet sein. Bei einer Gewindepumpstufe können die Holweckkanäle in der pumpaktiven Oberfläche des Rotors ausgebildet sein und die gegenüberliegende pumpaktive Oberfläche kann glatt ausgebildet sein. Es können auch beide pumpaktive Oberflächen derartige spiralförmige Kanäle aufweisen, um z.B. eine Kreuz- oder Doppelkreuzgewindepumpstufe zu bilden. Der Motorspalt kann als, insbesondere radialer, Dichtspalt der Pumpstufe ausgebildet sein, beispielsweise als Holweckspalt.

Die Vakuumpumpe weist vorzugsweise einen Elektromotor als Antriebsmotor auf. Der Motor kann ein bürstenloser Gleichstrommotor oder ein Asynchronmotor sein. Der Motorstator kann einen Kern umfassen, welcher vorzugsweise zumindest bereichsweise und insbesondere vollständig aus einem magnetischen, insbesondere weichmagnetischen, und/oder metallischen Material besteht. Der Motorstator kann eine oder mehrere Spulen umfassen, die vorzugsweise von dem Kern getragen sind und beispielsweise in Nuten des Motorstators, die an der radialen Innenseite des Motorstators vorgesehen sein können, festgelegt sind. Der Kern kann mehrere aufeinander gestapelte Scheiben aufweisen und zum Beispiel als Blechpaket ausgebildet sein.

Die Vakuumpumpe umfasst eine oder mehrere Prozessgaspumpstufen, welche das Prozessgas von dem Pumpeneinlass zu dem Pumpenauslass fördern. Bei der Vakuumpumpe kann es sich zum Beispiel um eine Turbomolekularpumpe handeln, welche eine oder mehrere turbomolekulare Pumpstufen umfasst. Die Vakuumpumpe kann, alternativ oder zusätzlich, eine oder mehrere Holweckpumpstufen, eine oder mehrere Gewindepumpstufen, eine oder mehrere Kreuz- oder Doppelkreuzgewindepumpstufen, eine oder mehrere Seitenkanalpumpstufen, eine oder mehrere Gaedepumpstufen und/oder eine oder mehrere Siegbahnpumpstufen als Prozessgaspumpstufen umfassen. Die Vakuumpumpe kann auch eine Verbundvakuumpumpe sein, in der unterschiedliche der vorstehend beschriebenen Pumpstufenarten miteinander kombiniert sind.

Der Rotor der Vakuumpumpe kann eine Rotorwelle umfassen, welche um die Rotationsachse drehbar gelagert sein kann. Die Rotorwelle bildet vorzugsweise den Anker des Antriebsmotors. Der Rotor kann eine auf der Rotorwelle angeordnete Permanentmagnetanordnung mit einem oder mehreren Polpaaren aufweisen, welche in dem magnetischen Einflussbereich des Motorstators angeordnet sind, wobei die Pole eines Paares einander bevorzugt in radialer Richtung gegenüberliegen. Der Rotor kann außerdem eine Kapselung für die Permanentmagnetanordnung aufweisen, welche die Permanentmagnetanordnung radial außenseitig umgibt und die Permanentmagnetanordnung gegenüber dem Zwischenraum und dem darin vorhandenen Prozessgas abdichtet, um eine Beschädigung der Permanentmagnetanordnung durch das Prozessgas zu verhindern.

Der, insbesondere schnell drehende, Rotor umfasst vorzugsweise die Rotorwelle und die Rotororgane ein oder mehrerer Prozessgaspumpstufen, welche einteilig mit der Rotorwelle ausgebildet oder als separate Teile mit der Rotorwelle verbunden sein können. Bei der vorstehend beschriebenen Ausführungsform mit einer zusätzlichen Siegbahnpumpstufe zur Förderung des Prozessgases in den Motorraum ist das Rotororgan der Siegbahnpumpstufe, welches gemäß der vorstehenden Beschreibung mit dem Rotororgan einer Prozessgaspumpstufe identisch sein kann, vorzugsweise ebenfalls einteilig mit der Rotorwelle ausgebildet oder als separates Teil mit der Rotorwelle verbunden.

Nachfolgend wird die Erfindung beispielhaft anhand vorteilhafter Ausführungsformen unter Bezugnahme auf die beigefügten Figuren beschrieben. Es zeigen:
- Fig. 1: eine Vakuumpumpe gemäß einer Ausführungsform der Erfindung im Querschnitt,
- Fig. 2: einen Ausschnitt der in Fig. 1 gezeigten Vakuumpumpe,
- Fig. 3: den Motorstator der in Fig. 1 und 2 zeigten Vakuumpumpe in Draufsicht,
- Fig. 4: den in Fig. 3 gezeigten Motorstator in Seitenansicht,
- Fig. 5: einen alternativen Motorstator in Seitenansicht,
- Fig. 6: eine Vakuumpumpe gemäß einer weiteren Ausführungsform der Erfindung im Querschnitt,
- Fig. 7: einen Ausschnitt der in Fig. 6 gezeigten Vakuumpumpe,
- Fig. 8: den Motorstator der in Fig. 6 und 7 gezeigten Vakuumpumpe in Draufsicht,
- Fig. 9: eine Vakuumpumpe gemäß einer nicht beanspruchten Ausführungsform im Querschnitt, und
- Fig. 10: einen Ausschnitt der in Fig. 9 gezeigten Vakuumpumpe.

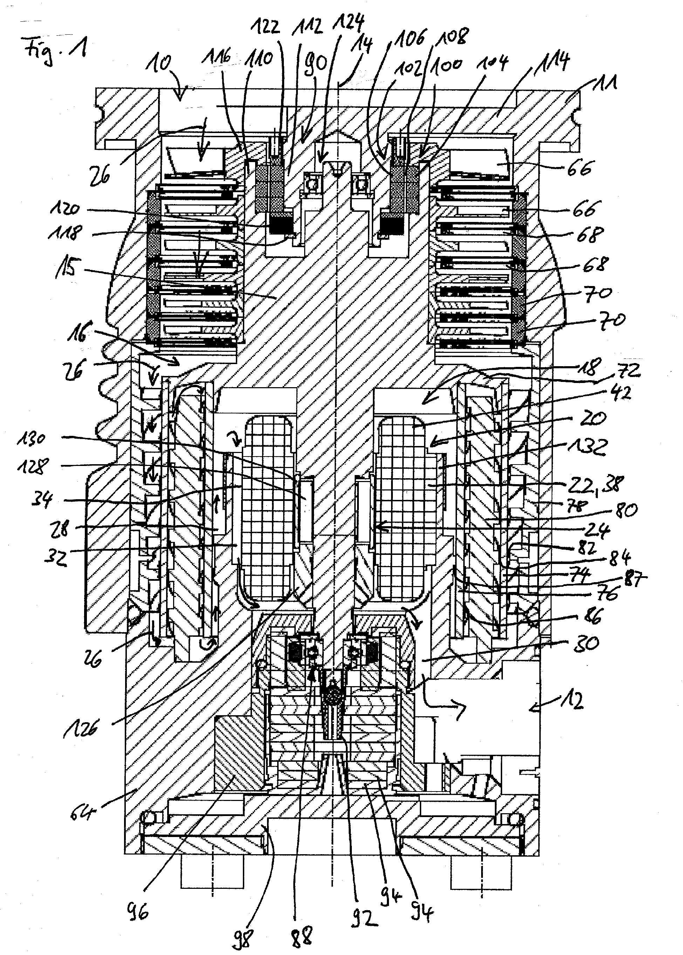

Die in Fig. 1 gezeigte Vakuumpumpe umfasst einen von einem Einlassflansch 11 umgebenen Pumpeneinlass 10 und einen Pumpenauslass 12 sowie mehrere Prozessgaspumpstufen zur Förderung des an dem Pumpeneinlass 10 anstehenden Prozessgases zu dem Pumpenauslass 12. Die Vakuumpumpe umfasst ein Gehäuse 64 und einen in dem Gehäuse 64 angeordneten Rotor 16 mit einer um die Rotationsachse 14 drehbar gelagerten Rotorwelle 15.

Die Pumpe ist im vorliegenden Ausführungsbeispiel als Turbomolekularpumpe ausgebildet und umfasst mehrere pumpwirksam miteinander in Serie geschaltete turbomolekulare Pumpstufen mit mehreren an der Rotorwelle 15 befestigten radialen Rotorscheiben 66 und zwischen den Rotorscheiben 66 angeordneten und in dem Gehäuse 64 festgelegten Statorscheiben 68, wobei eine Rotorscheibe 66 und eine benachbarte Statorscheibe 68 jeweils eine turbomolekulare Pumpstufe bilden. Die Statorscheiben 68 sind durch Abstandsringe 70 in einem gewünschten axialen Abstand zueinander gehalten.

Die Vakuumpumpe umfasst außerdem vier in radialer Richtung ineinander angeordnete und pumpwirksam miteinander in Serie geschaltete Holweckpumpstufen. Der Rotor der Holweckpumpstufen umfasst eine mit der Rotorwelle 15 einteilig ausgebildete Rotornabe 72 und zwei an der Rotornabe 72 befestigte und von dieser getragene zylindermantelförmige Holweckrotorhülsen 74, 76, die koaxial zur Rotationsachse 14 orientiert und in radialer Richtung ineinander geschachtelt sind. Ferner sind zwei zylindermantelförmige Holweckstatorhülsen 78, 80 vorgesehen, die ebenfalls koaxial zu der Rotationsachse 14 orientiert und in radialer Richtung ineinander geschachtelt sind. Eine dritte Holweckstatorhülse ist durch einen Aufnahmeabschnitt 132 des Gehäuses 64 gebildet, der in der nachstehend beschriebenen Weise zur Aufnahme und Festlegung des Antriebsmotors 20 dient.

Die pumpaktiven Oberflächen der Holweckpumpstufen sind durch die Mantelflächen, d.h. die radialen Innen- und Außenflächen, der Holweckrotorhülsen 74, 76, der Holweckstatorhülsen 78, 80 und des Aufnahmeabschnitts 132 gebildet. Die radiale Innenfläche der äußeren Holweckstatorhülse 78 liegt der radialen Außenfläche der äußeren Holweckrotorhülse 74 unter Ausbildung eines radialen Holweckspalts 82 gegenüber und bildet mit dieser die erste Holweckpumpstufe. Die radiale Innenfläche der äußeren Holweckrotorhülse 74 steht der radialen Außenfläche der inneren Holweckstatorhülse 80 unter Ausbildung eines radialen Holweckspalts 84 gegenüber und bildet mit dieser die zweite Holweckpumpstufe. Die radiale Innenfläche der inneren Holweckstatorhülse 80 liegt der radialen Außenfläche der inneren Holweckrotorhülse 76 unter Ausbildung eines radialen Holweckspalts 86 gegenüber und bildet mit dieser die dritte Holweckpumpstufe. Die radiale Innenfläche der inneren Holweckrotorhülse 76 liegt der radialen Außenfläche des Aufnahmeabschnitts 132 unter Ausbildung eines radialen Holweckspalts 87 gegenüber und bildet mit dieser die vierte Holweckpumpstufe.

Die vorstehend genannten pumpaktiven Oberflächen der Holweckstatorhülsen 78, 80 und des Aufnahmeabschnitts 132 weisen jeweils mehrere spiralförmig um die Rotationsachse 14 herum in axialer Richtung verlaufende Holwecknuten auf, während die gegenüberliegenden Mantelflächen der Holweckrotorhülsen 74, 76 glatt ausgebildet sind und das Gas im Betrieb der Vakuumpumpe in den Holwecknuten vorantreiben.

Zur drehbaren Lagerung der Rotorwelle 15 sind ein Wälzlager 88 im Bereich des Pumpenauslasses 12 und ein Permanentmagnetlager 90 im Bereich des Pumpeneinlasses 10 vorgesehen.

Im Bereich des Wälzlagers 88 ist an der Rotorwelle 15 eine konische Spritzmutter 92 mit einem zu dem Wälzlager 88 hin zunehmenden Außendurchmesser vorgesehen. Die Spritzmutter 92 steht mit zumindest einem Abstreifer eines Betriebsmittelspeichers in gleitendem Kontakt. Der Betriebsmittelspeicher umfasst mehrere aufeinander gestapelte saugfähige Scheiben 94, die mit einem Betriebsmittel für das Wälzlager 88, zum Beispiel mit einem Schmiermittel, getränkt sind. Im Betrieb der Vakuumpumpe wird das Betriebsmittel durch kapillare Wirkung von dem Betriebsmittelspeicher über den Abstreifer auf die rotierende Spritzmutter 92 übertragen und infolge der Zentrifugalkraft entlang der Spritzmutter 92 in Richtung des größer werdenden Außendurchmessers der Spritzmutter 92 zu dem Wälzlager 88 hin gefördert, wo es z.B. eine schmierende Funktion erfüllt. Das Wälzlager 88 und der Betriebsmittelspeicher sind durch einen wannenförmigen Einsatz 96 und ein Deckelelement 98 der Vakuumpumpe eingefasst.

Das Permanentmagnetlager umfasst eine rotorseitige Lagerhälfte 100 und eine statorseitige Lagerhälfte 102, welche jeweils einen Ringstapel aus mehreren in axialer Richtung aufeinander gestapelten permanentmagnetischen Ringen 104 bzw. 106 umfassen. Die Magnetringe 104, 106 liegen einander unter Ausbildung eines radialen Lagerspalts 108 gegenüber, wobei die rotorseitigen Magnetringe 104 radial außen und die statorseitigen Magnetringe 106 radial innen angeordnet sind. Das in dem Lagerspalt 108 vorhandene magnetische Feld ruft magnetische Abstoßungskräfte zwischen den Magnetringen 104, 106 hervor, welche eine radiale Lagerung der Rotorwelle 15 bewirken.

Die rotorseitigen Magnetringe 104 sind von einem Trägerabschnitt 110 der Rotorwelle getragen, welcher die Magnetringe 104 radial außenseitig umgibt. Die statorseitigen Magnetringe sind von einem statorseitigen Trägerabschnitt 112 getragen, welcher sich durch die Magnetringe 106 hindurch erstreckt und an radialen Streben 114 des Gehäuses 64 aufgehängt ist. Parallel zu der Rotationsachse 14 sind die rotorseitigen Magnetringe 104 in der einen Richtung durch ein mit dem Trägerabschnitt 110 gekoppeltes Deckelelement 116 und in der anderen Richtung durch einen radial vorstehenden Schulterabschnitt des Trägerabschnitts 110 festgelegt. Die statorseitigen Magnetringe 106 sind parallel zu der Rotationsachse 14 in der einen Richtung durch einen mit dem Trägerabschnitt 112 verbundenen Befestigungsring 118 und ein zwischen dem Befestigungsring 118 und den Magnetringen 106 angeordnetes Ausgleichselement 120 und in der anderen Richtung durch einen mit dem Trägerabschnitt 112 verbundenen Stützring 122 festgelegt.

Innerhalb des Magnetlagers ist ein Not- bzw. Fanglager 124 vorgesehen, welches im normalen Betrieb der Vakuumpumpe ohne Berührung leer läuft und erst bei einer übermäßigen radialen Auslenkung des Rotors 16 relativ zu den Stator in Eingriff gelangt, um einen radialen Anschlag für den Rotor 16 zu bilden, der eine Kollision der rotorseitigen Strukturen mit den statorseitigen Strukturen verhindert. Das Fanglager 124 ist als ungeschmiertes Wälzlager ausgebildet und bildet mit dem Rotor 16 und/oder dem Stator einen radialen Spalt, welcher bewirkt, dass das Fanglager 124 im normalen Pumpbetrieb außer Eingriff ist. Die radiale Auslenkung, bei der das Fanglager 124 in Eingriff gelangt, ist groß genug bemessen, so dass das Fanglager 124 im normalen Betrieb der Vakuumpumpe nicht in Eingriff gelangt, und gleichzeitig klein genug, so dass eine Kollision der rotorseitigen Strukturen mit den statorseitigen Strukturen unter allen Umständen verhindert wird.

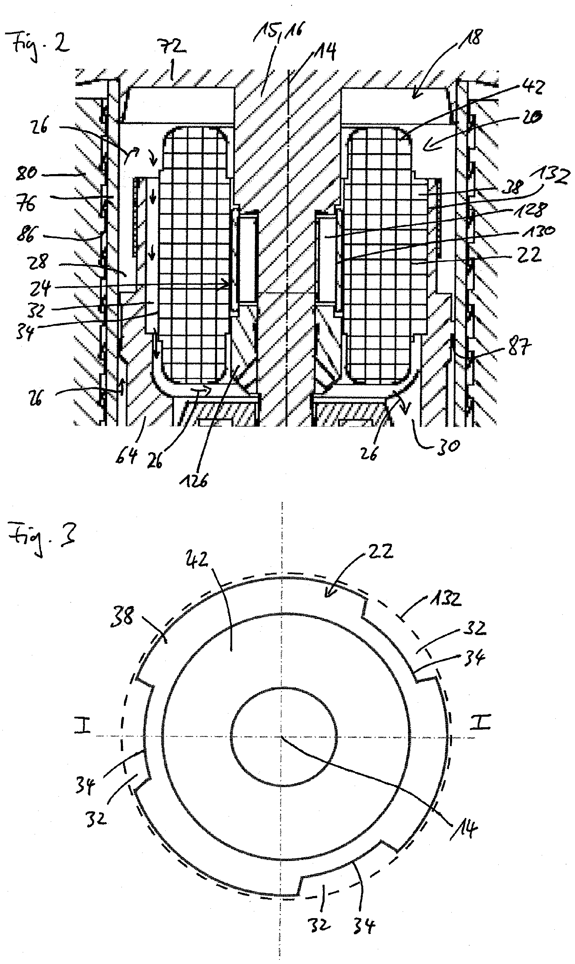

Die Vakuumpumpe umfasst einen Antriebsmotor 20 zum drehenden Antreiben des Rotors 16. Die Details des Antriebsmotors 20 und der umgebenden Pumpenkomponenten sind in Fig. 2 besonders gut erkennbar. Der Antriebsmotor 20 umfasst einen Motorstator 22 mit einem Kern 38 und mit ein oder mehreren in Fig. 1 nur schematisch dargestellten Spulen 42, die in an der radialen Innenseite des Kerns 38 vorgesehenen Nuten des Kerns 38 festgelegt sind.

Der Anker des Antriebsmotors 20 ist durch den Rotor 16 gebildet, dessen Rotorwelle 15 sich durch den Motorstator 22 hindurch erstreckt. Auf dem sich durch den Motorstator 22 hindurch erstreckenden Abschnitt der Rotorwelle 15 ist radial außenseitig eine Permanentmagnetanordnung 128 festgelegt. Zwischen dem Motorstator 22 und dem sich durch den Motorstator 22 hindurch erstreckenden Abschnitt des Rotors 16 ist ein Zwischenraum 24 angeordnet, welcher einen radialen Motorspalt umfasst, über den sich der Motorstator 22 und die Permanentmagnetanordnung 128 zur Übertragung des Antriebsmoments magnetisch beeinflussen.

Die Permanentmagnetanordnung 128 ist in axialer Richtung durch eine auf die Rotorwelle 15 aufgesteckte Befestigungshülse 126 an der Rotorwelle 15 fixiert. Eine Kapselung 130 umgibt die Permanentmagnetanordnung 128 an deren radialer Außenseite und dichtet diese gegenüber dem Zwischenraum 24 ab.

Der Motorstator 22 ist in dem Gehäuse 64 durch einen gehäusefesten Aufnahmeabschnitt 132 festgelegt, welcher den Motorstator 22 radial außenseitig umgibt und den Motorstator 22 in radialer und axialer Richtung abstützt. Der Aufnahmeabschnitt 132 begrenzt gemeinsam mit der Rotornabe 72 einen Motorraum 18, in dem der Antriebsmotor 20 aufgenommen ist.

Der Motorraum 18 weist einen auf der einen Seite des Zwischenraums 24 angeordneten und mit der innenliegenden, vierten Holweckpumpstufe gasleitend verbundenen Einlass 28 und einen auf der gegenüberliegenden Seite des Zwischenraums 24 angeordneten und mit dem Pumpenauslass 12 gasleitend verbundenen Auslass 30 auf.

Der Kern 38 des Motorstators 22 weist an seiner radialen Außenseite in dem in Fig. 1 und 2 links gezeigten Bereich eine Aussparung 34 auf, die gemeinsam mit dem benachbarten Bereich des Aufnahmeabschnitts 132 einen Kanal 32 bildet, durch den das in den Motorraum 18 geförderte Prozessgas an dem Zwischenraum 24 vorbei von dem Einlass 28 zu dem Auslass 30 förderbar ist.

Der Gasweg, auf dem das Prozessgas von dem Pumpeneinlass 10 zu dem Pumpenauslass 12 gelangt, ist in Fig. 1 und 2 durch Pfeile 26 veranschaulicht. Das Prozessgas wird ausgehend von dem Pumpeneinlass 10 zuerst der Reihe nach durch die turbomolekularen Pumpstufen und anschließend der Reihe nach durch die vier Holweckpumpstufen gefördert. Das aus der vierten Holweckpumpstufe austretende Gas gelangt in den Motorraum 18 und wird von dem Einlass 28 des Motorraums 18 durch den Kanal 32 hindurch zu dem Auslass 30 des Motorraums 18 und dem Pumpenauslass 12 gefördert.

Fig. 3 zeigt den Motorstator 22 des in Fig. 1 und 2 gezeigten Antriebsmotor 20 in axialer Draufsicht. Der Aufnahmeabschnitt 132 ist in Fig. 3 durch gestrichelte Linien dargestellt. Die der Darstellung von Fig. 1 und 2 entsprechende Schnittebene ist in Fig. 3 durch die Linie I-I gekennzeichnet.

Wie in Fig. 3 gezeigt, weist der Kern 38 des Motorstator 22 an seiner radialen Außenseite drei Aussparungen 34 auf, die im eingebauten Zustand gemeinsam mit einem jeweils benachbarten Bereich des Aufnahmeabschnitts 132 jeweils einen wie in Fig. 1 und 2 gezeigten Kanal 32 bilden, durch den das Prozessgas an dem Zwischenraum 24 des Motors vorbei von dem Einlass 28 zu dem Auslass 30 des Motorraums gelangt. Die Aussparungen 34 sind jeweils durch in radialer Richtung in den Motorstator 22 einspringende und in axialer Richtung orientierte Nuten gebildet.

Wie aus Fig. 3 ersichtlich ist, sind die drei Kanäle 32 gleichmäßig über den Umfang des Motorstators 22 verteilt, so dass einem Kanal 32 in radialer Richtung stets ein Bereich des Motorstators 22 gegenüberliegt, in dem keine Aussparung 34 angeordnet ist. Dadurch wird die Laufgleichmäßigkeit des Antriebsmotors 20 verbessert.

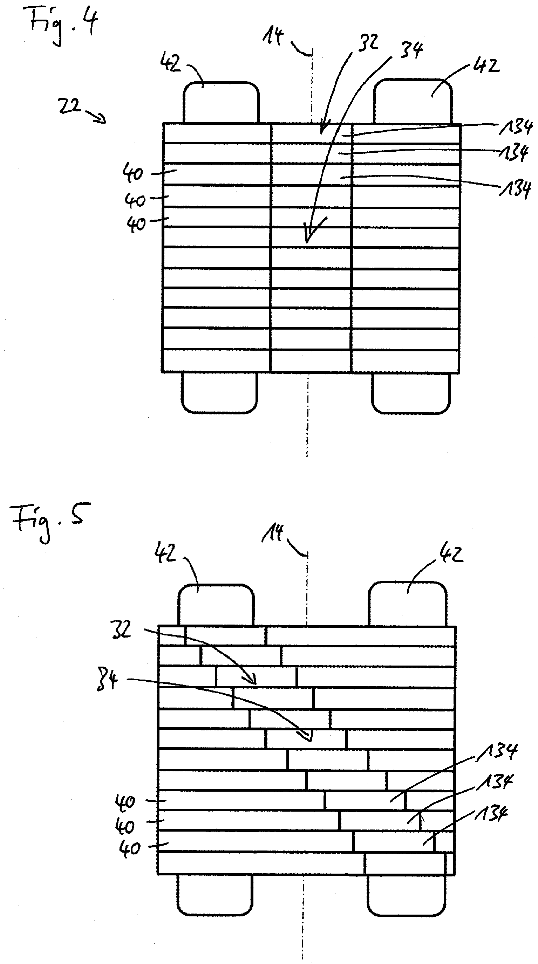

Fig. 4 zeigt den in Fig. 1 bis 3 gezeigten Motorstator 22 in Seitenansicht. Wie in Fig. 4 gezeigt, besteht der Kern 38 des Motorstators 22 aus mehreren in axialer Richtung aufeinander gestapelten Scheiben 40, welche für jeden Kanal 32 jeweils eine Aussparung 134 an ihrer radialen Außenseite aufweisen, wobei die einzelnen Aussparungen 134 zur Bildung der Aussparung 34 des Motorstators 22 miteinander fluchten.

Fig. 5 zeigt einen alternativen Motorstator 22, welcher in der in Fig. 1 und 2 gezeigten Vakuumpumpe anstelle des in Fig. 3 und 4 gezeigten Motorstators 22 verwendbar ist. Mit Ausnahme der nachstehend beschriebenen Besonderheiten entspricht der in Fig. 5 gezeigte Motorstator 22 dem in Fig. 4 gezeigten Motorstator 22.

Während die in Fig. 4 gezeigten Aussparungen 134 in axialer Richtung miteinander fluchten, sind die aufeinanderfolgenden Aussparungen 134 der einzelnen Scheiben 40 bei dem in Fig. 5 gezeigten Motorstator 22 in Umfangsrichtung zueinander winkelversetzt angeordnet. Die Aussparungen 134 fluchten somit in einer Richtung schräg zu der Rotationsachse 14 miteinander und bilden eine schräg zu der Rotationsachse 14 orientierte Aussparung 34 und einen schräg zu der Rotationsachse 14 orientierten Kanal 32. Die Aussparung 34 ist folglich über einen größeren Bereich des Umfangs des Motorstators 22 verteilt, wodurch die Laufgleichmäßigkeit des Motors verbessert wird. Auch der in Fig. 5 gezeigte Motorstator 22 umfasst vorzugsweise drei gleichmäßig über den Umfang des Motorstators 22 verteilte Aussparungen 34, die in der vorstehend beschriebenen Weise ausgebildet sind.

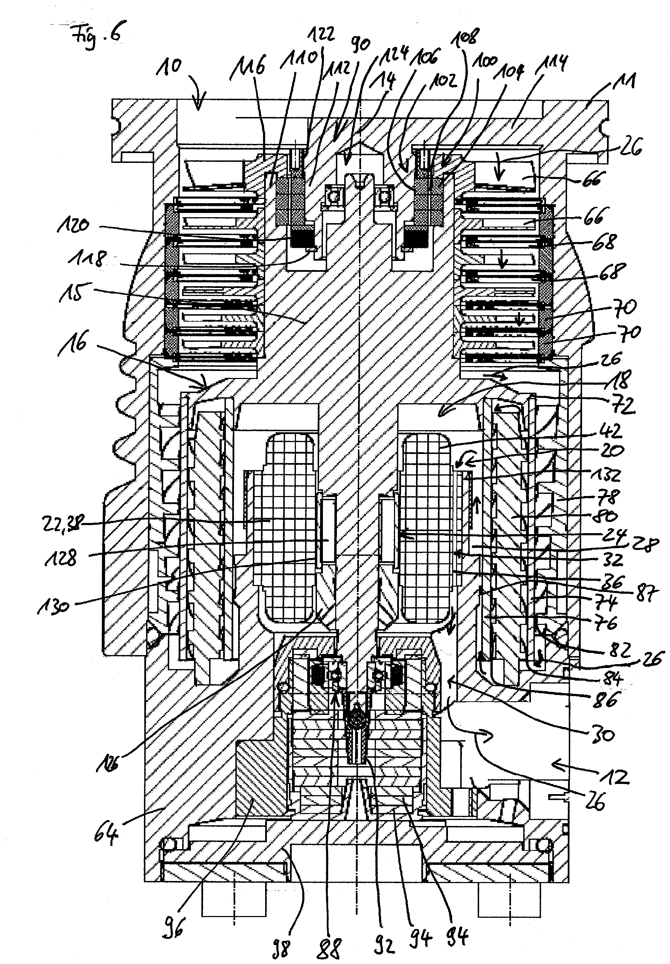

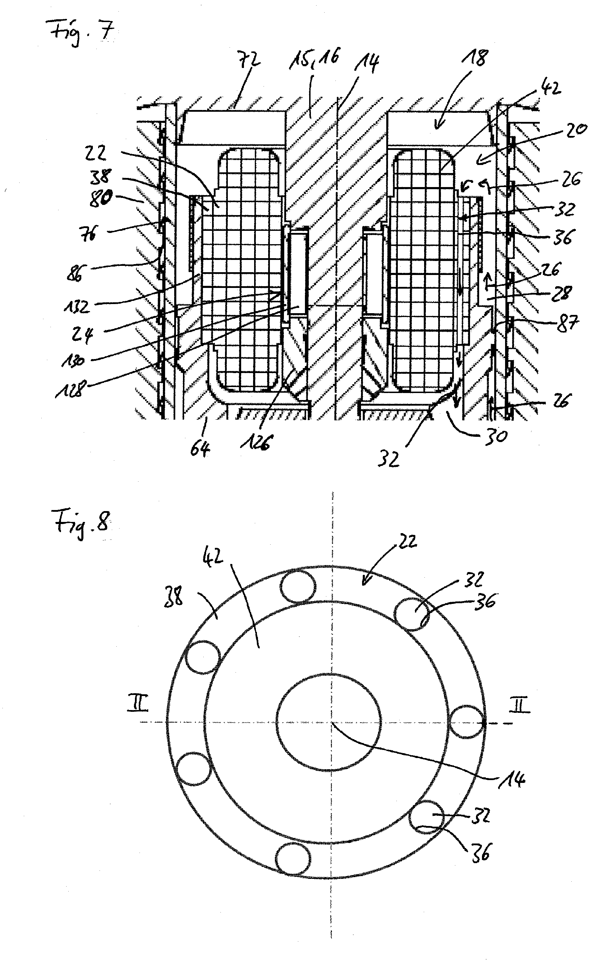

Fig. 6 und 7 zeigen eine Vakuumpumpe gemäß einer weiteren Ausführungsform der Erfindung, welche abgesehen von den nachstehend im Einzelnen erläuterten Besonderheiten der in Fig. 1 und 2 gezeigten Vakuumpumpe entspricht. Prinzipiell sind in allen Figuren identische bzw. einander entsprechende Bestandteile mit denselben Bezugszeichen bezeichnet.

Bei der in Fig. 6 und 7 gezeigten Vakuumpumpe umfasst der Motorstator 22 anstelle von Aussparungen 34, welche gemeinsam mit benachbarten Bereichen des Aufnahmeabschnitts 132 jeweils einen Kanal 32 begrenzen, durch den Motorstator 22 hindurch gehende Öffnungen 36 mit einem geschlossenen Querschnitt, welche jeweils einen Kanal 32 begrenzen, durch den das Gas an dem Zwischenraum 24 vorbei von dem Einlass 28 zu dem Auslass 30 des Motorraums 18 förderbar ist.

Fig. 8 zeigt den Motorstator 22 des in Fig. 6 und 7 gezeigten Antriebsmotors 20 in axialer Draufsicht. Die der Darstellung von Fig. 6 und 7 entsprechende Schnittebene ist in Fig. 8 durch die Linie II-II gekennzeichnet. Wie in Fig. 8 gezeigt, weist der Motorstator 22 insgesamt sieben durchgehende geschlossene Öffnungen 36 auf, welche jeweils einen Kanal 32 für das Prozessgas begrenzen. Die Öffnungen 36 sind gleichmäßig über den Umfang des Motorstators 22 verteilt, so dass infolge der ungeraden Anzahl von Öffnungen 36 jeder Öffnung 36 in radialer Richtung ein Abschnitt des Motorstators 22 ohne Öffnung 36 gegenüberliegt, wodurch die Laufgleichmäßigkeit des Antriebsmotors 20 verbessert wird.

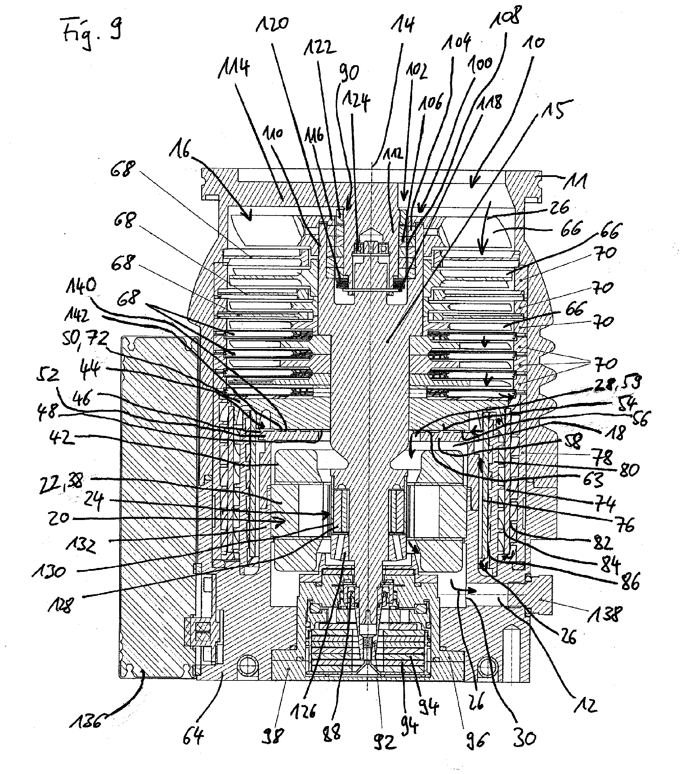

Fig. 9 zeigt eine Vakuumpumpe gemäß einer nicht beanspruchten Ausführungsform, welche abgesehen von den nachstehend beschriebenen Besonderheiten im Wesentlichen den in Fig. 1, 2, 6 und 7 gezeigten Vakuumpumpen entspricht. In Fig. 9 ist eine elektronische Steuereinheit 136 der Vakuumpumpe gezeigt, mit der der Antriebsmotor 20 ansteuerbar ist. Ferner ist ein Verschlusselement 138 für den Pumpenauslass 12 vorgesehen, welches vor der Inbetriebnahme der Vakuumpumpe zu entfernen ist.

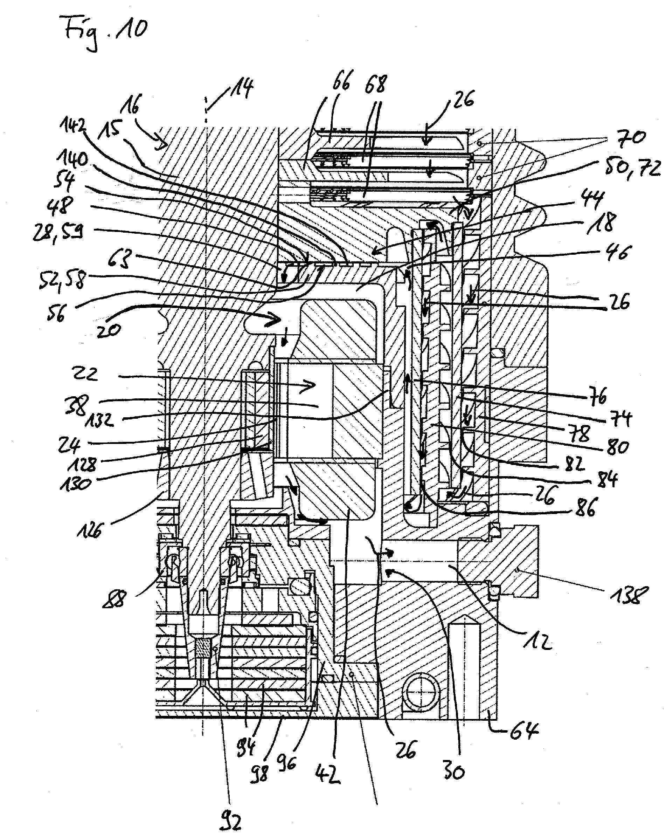

Bei der in Fig. 9 und 10 gezeigten Vakuumpumpe ist der Motorraum 18 durch eine Trennwand 58 von dem Schöpfraum der Vakuumpumpe getrennt. Die Rotorwelle 15 erstreckt sich unter Ausbildung eines radialen Spalts 59 durch die Trennwand 58 hindurch, wobei der Spalt 59 gleichzeitig den Einlass 28 des Motorraums 18 bildet. Eine vierte Holweckpumpstufe ist nicht vorgesehen, könnte aber ebenso vorhanden sein.

Die Vakuumpumpe umfasst eine innerhalb der beiden Holweckrotorhülsen 74, 76 angeordnete Siegbahnpumpstufe 44 mit einem gasleitend mit der dritten Holweckpumpstufe verbundenen Einlass 46 und einem in den Spalt 59 mündenden Auslass 48, mit der das Prozessgas von dem Schöpfraum der Vakuumpumpe in den Motorraum 18 förderbar ist.

Die Rotornabe 72 der Holweckpumpstufen, welche im vorliegenden Ausführungsbeispiel als separates, mit der Rotorwelle 15 drehfest verbundenes Teil ausgebildet ist, bildet gleichzeitig das Rotororgan 50 der Siegbahnpumpstufe und die Trennwand 58 bildet gleichzeitig das Statororgan 52 der Siegbahnpumpstufe 44. Das Rotororgan 50 und das Statororgan 52 bilden jeweils eine von zwei einander unter Bildung eines axialen Dichtspalts 63 gegenüberliegenden pumpaktiven Oberflächen 54, 56 der Siegbahnpumpstufe 44, die im Wesentlichen radial zu der Rotationsachse 14 orientiert sind. Die pumpaktive Oberfläche 54 des Rotororgans 50 ist dabei glatt ausgebildet, während die pumpaktive Oberfläche 56 des Statororgans 52 strukturiert ausgebildet ist.

Die pumpaktive Oberfläche 56 des Statororgans 52 umfasst eine Erhebung 140, welche einen in einer radialen Ebene schraubenlinienförmig von dem radial außenseitigen Einlass 46 zu dem radial innenseitigen Auslass 48 der Siegbahnpumpstufe 44 verlaufenden Förderkanal 142 der Siegbahnpumpstufe begrenzt, in dem das Prozessgas bei dem Betrieb der Vakuumpumpe vorangetrieben wird.

Bei dem Betrieb der in Fig. 9 und 10 gezeigten Vakuumpumpe wird das Prozessgas gemäß den Pfeilen 26 der Reihe nach durch die turbomolekularen Pumpstufen, die drei Holweckpumpstufen und durch die Siegbahnpumpstufe 44 in den Motorraum 18 gefördert. Das in den Motorraum 18 geförderte Gas wird durch den Zwischenraum 24 hindurch zu dem Auslass 30 des Motorraums 18 gefördert. Im Rahmen der vorliegenden Erfindung sind allerdings zumindest durch den Motorstator 22 begrenzte Kanäle vorgesehen, durch welche das Prozessgas an dem Zwischenraum 24 vorbei von dem Einlass 28 zu dem Auslass 30 des Motorraums 18 förderbar ist.

Die in Fig. 1 bis 10 gezeigten Vakuumpumpen können außerdem so abgewandelt werden, dass die einander gegenüberliegenden Oberflächen des Motorstators 22 und des Rotors 16, die den Zwischenraum 24 begrenzen, eine pumpaktive Struktur zur aktiven Förderung des Prozessgases durch den Zwischenraum 24 hindurch bilden. Dadurch kann die Saugleistung der Pumpe noch weiter erhöht werden. Eine solche Ausgestaltung einer Vakuumpumpe ist darüber hinaus auch unabhängig von den in Fig. 1 bis 10 gezeigten Ausführungsformen möglich. Dabei muss jedoch erfindungsgemäß zumindest ein Kanal vorhanden sein, durch den ein Gasweg an den Zwischenraum 24 vorbei führt.

### Bezugszeichenliste

- 10: Pumpeneinlass
- 11: Einlassflansch
- 12: Pumpenauslass
- 14: Rotationsachse
- 15: Rotorwelle
- 16: Rotor
- 18: Motorraum
- 20: Antriebsmotor
- 22: Motorstator
- 24: Zwischenraum
- 26: Pfeile, Gasweg
- 28: Einlass
- 30: Auslass
- 32: Kanal
- 34: Aussparung
- 36: Öffnung
- 38: Kern
- 40: Scheibe
- 42: Spule
- 44: Siegbahnpumpstufe
- 46: Einlass
- 48: Auslass
- 50: Rotororgan
- 52: Statororgan
- 54, 56: pumpaktive Oberfläche
- 58: Trennwand
- 59: Spalt
- 63: Dichtspalt
- 64: Gehäuse
- 66: Rotorscheibe
- 68: Statorscheibe
- 70: Abstandsring
- 72: Rotornabe
- 74, 76: Holweckrotorhülse
- 78, 80: Holweckstatorhülse
- 82, 84, 86, 87: Holweckspalt
- 88: Wälzlager
- 90: Permanentmagnetlager
- 92: Spritzmutter
- 94: saugfähige Scheibe
- 96: wannenförmiger Einsatz
- 98: Deckelelement
- 100: rotorseitige Lagerhälfte
- 102: statorseitige Lagerhälfte
- 104, 106: Magnetring
- 108: Lagerspalt
- 110, 112: Trägerabschnitt
- 114: Strebe
- 116: Deckelelement
- 118: Befestigungsring
- 120: Ausgleichselement
- 122: Stützring
- 124: Fanglager
- 126: Befestigungshülse
- 128: Permanentmagnetanordnung
- 130: Kapselung
- 132: Aufnahmeabschnitt
- 134: Aussparung
- 136: Steuereinheit
- 138: Verschlusselement
- 140: Erhebung
- 142: Förderkanal

## Patentansprüche

1. Vakuumpumpe mit einem Pumpeneinlass (10), einem Pumpenauslass (12), einem um eine Rotationsachse (14) drehbaren Rotor (16), wenigstens einer Prozessgaspumpstufe zur Förderung eines an dem Pumpeneinlass (10) anstehenden Prozessgases von dem Pumpeneinlass (10) zu dem Pumpenauslass (12), einem Motorraum (18) und einem in dem Motorraum (18) angeordneten und zum drehenden Antreiben des Rotors (16) ausgebildeten Antriebsmotor (20), welcher einen Motorstator (22) umfasst,
wobei wenigstens ein Gasweg für das Prozessgas von dem Pumpeneinlass (10) zu dem Pumpenauslass (12) vorgesehen ist, der durch den Motorraum (18) führt und zumindest abschnittsweise an dem Motorstator (22) entlang oder durch den Motorstator (22) hindurch führt,
wobei ein zwischen dem Motorstator (22) und dem Rotor (16) angeordneter Zwischenraum (24) vorgesehen ist, wobei der Gasweg an dem Zwischenraum (24) vorbei führt,
**dadurch gekennzeichnet, dass**
ein oder mehrere Kanäle (32) vorgesehen sind, durch die der Gasweg an dem Zwischenraum (24) vorbei verläuft und die über einen Teil ihres Umfangs oder über ihren gesamten Umfang durch den Motorstator (22) begrenzt sind, wobei zumindest ein Kanal (32) oder jeder Kanal (32) durch eine Aussparung (34) oder Öffnung (36) des Motorstators (22) begrenzt ist.

2. Vakuumpumpe nach Anspruch 1,
**dadurch gekennzeichnet, dass**
der Motorstator (22) einen Kern (38) und wenigstens eine von dem Kern (38) getragene Spule (42) aufweist, wobei der Kern (38) mehrere aufeinander gestapelte Scheiben (40) umfasst, wobei zumindest ein Kanal (32) oder jeder Kanal (32) durch Aussparungen (134) oder Öffnungen der Scheiben (40) begrenzt ist.

3. Vakuumpumpe nach Anspruch 1 oder 2,
**dadurch gekennzeichnet, dass**
die Kanäle (32) so ausgebildet und/oder angeordnet sind, dass mit dem Antriebsmotor (20) über den gesamten auf die Rotationsachse (14) bezogenen Drehwinkel ein im Wesentlichen gleichmäßiges Antriebsdrehmoment erzeugbar ist.

4. Vakuumpumpe nach einem der vorstehenden Ansprüche,
**dadurch gekennzeichnet,**
**dass** zumindest einem und insbesondere jedem Kanal (32) in radialer Richtung ein Bereich des Motorstators (22) gegenüberliegt, in dem kein Kanal (32) angeordnet ist, und/oder
**dass** eine ungerade Anzahl von Kanälen (32) vorgesehen ist und die Kanäle (32) vorzugsweise im Wesentlichen gleichmäßig über den Umfang des Motorstators (22) verteilt angeordnet sind, und/oder
**dass** zumindest ein Kanal (32) und insbesondere jeder Kanal (32) zumindest über einen Teil seiner Länge und insbesondere über seine gesamte Länge geneigt zu der Rotationsachse (14) des Antriebsmotors (20) orientiert ist.

5. Vakuumpumpe nach einem der vorstehenden Ansprüche,
**dadurch gekennzeichnet, dass**
wenigstens eine Dichtung zur fluiddichten Abdichtung des Zwischenraums (24) vorgesehen ist.

6. Vakuumpumpe nach einem der vorstehenden Ansprüche,
**dadurch gekennzeichnet, dass**
eine Siegbahnpumpstufe (44) vorgesehen ist, die zur Förderung des Prozessgases in den Motorraum (18) ausgebildet ist.

7. Vakuumpumpe nach Anspruch 6,
**dadurch gekennzeichnet, dass**
die Siegbahnpumpstufe einen mit der wenigstens einen Prozessgaspumpstufe gasleitend verbundenen Einlass (46) und einen mit dem Motorraum (18) gasleitend verbundenen Auslass (48) aufweist.

8. Vakuumpumpe nach Anspruch 6 oder 7,
**dadurch gekennzeichnet, dass**
die Siegbahnpumpstufe (44) ein, insbesondere scheibenförmiges, Rotororgan (50) und ein, insbesondere scheibenförmiges, Statororgan (52) umfasst, die vorzugsweise jeweils eine pumpaktive Oberfläche (54, 56) der Siegbahnpumpstufe (44) bilden.

9. Vakuumpumpe nach Anspruch 8,
**dadurch gekennzeichnet, dass**
das Rotororgan (50) gleichzeitig ein rotierendes Organ der Prozessgaspumpstufe bildet und vorzugsweise als Rotorscheibe (66) einer als Turbomolekularpumpstufe ausgebildeten Prozessgaspumpstufe oder als Rotornabe (72) einer als Holweckpumpstufe, Gewindepumpstufe oder als Kreuz- bzw. Doppelkreuzgewindepumpstufe ausgebildeten Prozessgaspumpstufe ausgebildet ist.

10. Vakuumpumpe nach einem der Ansprüche 8 oder 9,
**dadurch gekennzeichnet, dass**
das Statororgan (52) der Siegbahnpumpstufe (44) von einer den Motorraum (18) begrenzenden Trennwand (58) getragen oder durch die Trennwand (58) gebildet ist.

11. Vakuumpumpe nach einem der Ansprüche 6 bis 10,
**dadurch gekennzeichnet, dass**
die Siegbahnpumpstufe (44) dazu ausgebildet ist, das Prozessgas durch einen zwischen dem Rotor (16) und einer den Motorraum (18) begrenzenden Trennwand (58) ausgebildeten Spalt (59) in den Motorraum (18) zu fördern.

12. Vakuumpumpe nach einem der vorstehenden Ansprüche,
**dadurch gekennzeichnet, dass**
einander gegenüberliegende Oberflächen des Motorstators (22) und des Rotors (16), die den Zwischenraum (24) begrenzen, pumpaktive Oberflächen einer Pumpstufe zur Förderung des Prozessgases durch den Zwischenraum (24) bilden.

13. Vakuumpumpe nach Anspruch 12,
**dadurch gekennzeichnet, dass**
die Pumpstufe als Holweckpumpstufe, Gewindepumpstufe oder als Kreuz- bzw. Doppelkreuzgewindepumpstufe ausgebildet ist.

## Claims

1. A vacuum pump comprising a pump inlet (10); a pump outlet (12); a rotor (16) rotatable about an axis of rotation (14); at least one process gas pump stage for conveying a process gas present at the pump inlet (10) from the pump inlet (10) to the pump outlet (12); a motor space (18); and a drive motor (20) which is arranged in the motor space (18), which is configured for the rotating driving of the rotor (16) and which comprises a motor stator (22),
wherein at least one gas path for the process gas is provided from the pump inlet (10) to the pump outlet (12), said gas path leading through the motor space (18) and leading at least sectionally along the motor stator (22) or through the motor stator (22),
wherein an intermediate space (24) is provided which is arranged between the motor stator (22) and the rotor (16), with the gas path leading past the intermediate space (24),
**characterized in that**
one or more passages (32) are provided through which the gas path extends past the intermediate space (24) and which are bounded over a part of their periphery or over their total periphery by the motor stator (22), with at least one passage (32) or each passage (32) being bounded by a cut-out (34) or opening (36) of the motor stator (22).

2. A vacuum pump in accordance with claim 1,
**characterized in that**
the motor stator (22) has a core (38) and at least one coil (42) carried by the core (38), with the core (38) comprising a plurality of disks (40) stacked on one another, with at least one passage (32) or each passage (32) being bounded by cut-outs (134) or openings of the disks (40).

3. A vacuum pump in accordance with claim 1 or claim 2,
**characterized in that**
the passages (32) are configured and/or arranged such that a substantially uniform drive torque can be generated by the drive motor (20) over the total angle of rotation with respect to the axis of rotation (14).

4. A vacuum pump in accordance with any one of the preceding claims,
**characterized in that**
a region of the motor stator (22) in which no passage (32) is arranged is disposed opposite at least one and in particular each passage (32) in the radial direction; and/or
**in that** an odd number of passages (32) is provided and the passages (32) are preferably substantially arranged distributed uniformly over the periphery of the motor stator (22); and/or
**in that** at least one passage (32), and in particular each passage (32), is oriented at least over a part of its length, and in particular over its total length, inclined with respect to the axis of rotation (14) of the drive motor (20).

5. A vacuum pump in accordance with any one of the preceding claims,
**characterized in that**
at least one seal is provided for the fluid-tight sealing of the intermediate space (24).

6. A vacuum pump in accordance with any one of the preceding claims,
**characterized in that**
a Siegbahn pump stage (44) is provided which is configured for conveying the process gas into the motor space (18).

7. A vacuum pump in accordance with claim 6,
**characterized in that**
the Siegbahn pump stage has an inlet (46) connected in a gas-conducting manner to the at least one process gas pump stage and has an outlet (48) connected in a gas-conducting manner to the motor space (18).

8. A vacuum pump in accordance with claim 6 or claim 7,
**characterized in that**
the Siegbahn pump stage (44) comprises a rotor member (50), in particular a disk-shaped rotor member, and a stator member (52), in particular a disk-shaped stator member, which preferably each form a surface (54, 56) acting as a pump of the Siegbahn pump stage (44).

9. A vacuum pump in accordance with claim 8,
**characterized in that**
the rotor member (50) simultaneously forms a rotating member of the process gas pump stage and is preferably configured as a rotor disk (66) of a process gas pump stage configured as a turbomolecular pump stage or as a rotor hub (72) of a process gas pump stage configured as a Holweck pump stage, as a threaded pump stage or as a cross-thread or double cross-thread pump stage.

10. A vacuum pump in accordance with one of the claims 8 or 9,
**characterized in that**
the stator member (52) of the Siegbahn pump stage (44) is carried by a partition wall (58) bounding the motor space (18) or is formed by the partition wall (58).

11. A vacuum pump in accordance with any one of the claims 6 to 10,
**characterized in that**
the Siegbahn pump stage (44) is configured to convey the process gas into the motor space (18) through a gap (59) formed between the rotor (16) and a partition wall (58) bounding the motor space (18).

12. A vacuum pump in accordance with any one of the preceding claims,
**characterized in that**
surfaces of the motor stator (22) and of the rotor (16) which are disposed opposite one another and which bound the intermediate space (24) form surfaces acting as pumps of a pump stage for conveying the process gas through the intermediate space (24).

13. A vacuum pump in accordance with claim 12,
**characterized in that**
the pump stage is configured as a Holweck pump stage, as a threaded pump stage or as a cross-thread or double cross-thread pump stage.

## Revendications

1. Pompe à vide comportant une entrée de pompe (10), une sortie de pompe (12), un rotor (16) rotatif autour d'un axe de rotation (14), au moins un étage de pompage de gaz de traitement pour convoyer depuis l'entrée de pompe (10) vers la sortie de pompe (12) un gaz de traitement se présentant au niveau de l'entrée de pompe (10), un espace moteur (18) et un moteur d'entraînement (20) agencé dans l'espace moteur (18), réalisé pour entraîner en rotation le rotor (16) et comprenant un stator de moteur (22),
dans laquelle
il est prévu au moins un trajet de gaz pour le gaz de traitement depuis l'entrée de pompe (10) vers la sortie de pompe (12), qui mène à travers l'espace moteur (18) et qui mène au moins partiellement le long du stator de moteur (22) ou à travers le stator de moteur (22),
un espace intermédiaire (24) est prévu entre le stator de moteur (22) et le rotor (16), le trajet de gaz passant à côté de l'espace intermédiaire (24), **caractérisé en ce que**
il est prévu un ou plusieurs canaux (32) à travers lesquels le trajet de gaz passe à côté de l'espace intermédiaire (24) et qui sont délimités sur une partie de leur périphérie ou sur toute leur périphérie par le stator de moteur (22), au moins un canal (32) ou chaque canal (32) étant délimité par une échancrure (34) ou par une ouverture (36) du stator de moteur (22).

2. Pompe à vide selon la revendication 1,
**caractérisée en ce que**
le stator de moteur (22) présente un noyau (38) et au moins une bobine (42) portée par le noyau (38), le noyau (38) comprenant plusieurs disques (40) empilés les uns sur les autres, au moins un canal (32) ou chaque canal (32) étant délimité par des échancrures (134) ou par des ouvertures des disques (40).

3. Pompe à vide selon la revendication 1 ou 2,
**caractérisée en ce que**
les canaux (32) sont réalisés et/ou agencés de telle sorte qu'un couple d'entraînement sensiblement régulier sur tout l'angle de rotation relatif à l'axe de rotation (14) peut être généré par le moteur d'entraînement (20).

4. Pompe à vide selon l'une des revendications précédentes,
**caractérisée en ce que**
une zone du stator de moteur (22) se situe en regard d'au moins un et en particulier de chaque canal (32) en direction radiale, ladite zone étant dépourvue de canal (32), et/ou
**en ce qu'**il est prévu un nombre impair de canaux (32) et les canaux (32) sont agencés en étant répartis de préférence sensiblement régulièrement sur la périphérie du stator de moteur (22), et/ou
**en ce qu'**au moins un canal (32) et en particulier chaque canal (32) est orienté, au moins sur une partie de sa longueur et en particulier sur toute sa longueur, en étant incliné par rapport à l'axe de rotation (14) du moteur d'entraînement (20).

5. Pompe à vide selon l'une des revendications précédentes,
**caractérisée en ce que**
il est prévu au moins un joint pour l'étanchement aux fluides de l'espace intermédiaire (24).

6. Pompe à vide selon l'une des revendications précédentes,
**caractérisée en ce que**
il est prévu un étage de pompage de Siegbahn (44) qui est réalisé pour convoyer le gaz de traitement jusque dans l'espace moteur (18).

7. Pompe à vide selon la revendication 6,
**caractérisée en ce que**
l'étage de pompage de Siegbahn présente au moins une entrée (46) reliée avec conduction de gaz audit au moins un étage de pompage de gaz de traitement, et une sortie (48) reliée avec conduction de gaz à l'espace moteur (18).

8. Pompe à vide selon la revendication 6 ou 7,
**caractérisée en ce que**
l'étage de pompage de Siegbahn (44) comprend un organe de rotor (50) en particulier en forme de disque et un organe de stator (52) en particulier en forme de disque, qui constituent chacun de préférence une surface active en pompage (54, 56) de l'étage de pompage de Siegbahn.

9. Pompe à vide selon la revendication 8,
**caractérisée en ce que**
l'organe de rotor (50) constitue en même temps un organe rotatif de l'étage de pompage de gaz de traitement et est réalisé de préférence à titre de disque de rotor (66) d'un étage de pompage de gaz de traitement réalisé sous forme d'étage de pompage turbomoléculaire, ou à titre de moyeu de rotor (72) d'un étage de pompage de gaz de traitement réalisé sous forme d'étage de pompage de Holweck, d'étage de pompage à pas de vis ou d'étage de pompage à pas de vis en croix ou en croix double.

10. Pompe à vide selon l'une des revendications 8 ou 9,
**caractérisée en ce que**
l'organe stator (52) de l'étage de pompage de Siegbahn (44) est porté par une cloison (58) délimitant l'espace moteur (18) ou est formé par la cloison (58).

11. Pompe à vide selon l'une des revendications 6 à 10,
**caractérisée en ce que**
l'étage de pompage de Siegbahn (44) est réalisé pour convoyer le gaz de traitement à travers une fente (59), ménagée entre le rotor (16) et une cloison (58) délimitant l'espace moteur (18), jusque dans l'espace moteur (18).

12. Pompe à vide selon l'une des revendications précédentes,
**caractérisée en ce que**
des surfaces opposées l'une à l'autre du stator de moteur (22) et du rotor (16) qui délimitent l'espace intermédiaire (24) constituent des surfaces actives en pompage d'un étage de pompage pour convoyer le gaz de traitement à travers l'espace intermédiaire (24).

13. Pompe à vide selon la revendication 12,
**caractérisée en ce que**
l'étage de pompage est réalisé sous forme d'étage de pompage de Holweck, d'étage de pompage à pas de vis ou sous forme d'étage de pompage à pas de vis en croix ou en croix double.
